Europäisches Patentamt

European Patent Office

Office européen des brevets

(11) Numéro de publication : **0 161 126**
**B1**

(19)

(12) **FASCICULE DE BREVET EUROPÉEN**

(45) Date de publication du fascicule du brevet :
15.06.88

(51) Int. Cl.⁴ : **G 02 B   6/44, G 01 M   3/28**

(21) Numéro de dépôt : **85400513.9**

(22) Date de dépôt : **18.03.85**

(54) Câble optique pressurisé équipé pour la détection et la localisation de pertes de pression susceptibles de l'affecter.

(30) Priorité : **23.03.84 FR 8404562**

(43) Date de publication de la demande :
**13.11.85 Bulletin 85/46**

(45) Mention de la délivrance du brevet :
**15.06.88 Bulletin 88/24**

(84) Etats contractants désignés :
**DE GB IT NL SE**

(56) Documents cités :
**DE-A- 2 717 412
DE-A- 2 931 534
DE-A- 3 230 020
FR-A- 2 480 986
US-A- 4 270 049**

(73) Titulaire : **Arzur, Bernard
60, Résidence Duroux
F-22300 Lannion (FR)**

**Nonclercq, Bernard
Kergomar Troguery
F-22450 La Roche - Derrien (FR)**

(72) Inventeur : **Arzur, Bernard
60, Résidence Duroux
F-22300 Lannion (FR)**
Inventeur : **Nonclercq, Bernard
Kergomar Troguery
F-22450 La Roche - Derrien (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention concerne un câble optique pressurisé équipé pour la détection et la localisation de pertes de pression susceptibles de l'affecter.

La technique de pressurisation des câbles de télécommunication est connue depuis de nombreuses années. Cette technique s'est d'abord appliquée aux câbles constitués de conducteurs électriques. Avec l'évolution des techniques et l'apparition de la fibre optique, on tend actuellement à appliquer cette technique aux câbles optiques. CF ainsi, à titre d'exemple, DE-A-3 230 029, qui décrit un câble optique pressurisé, équipé d'un système de surveillance de la pression dans le câble.

L'une des pannes les plus courantes rencontrées en cours d'exploitation d'un câble optique pressurisé est la détérioration de ce câble, avec pour conséquence le risque d'introduction d'humidité dans celui-ci. Il est donc nécessaire de disposer d'équipements capables de détecter et de localiser une telle panne le plus rapidement possible afin de pouvoir intervenir sans retard pour remettre le câble en état.

Il est déjà connu de surveiller un câble pressurisé au moyen de transducteurs de pression mis à la même pression que ce câble et régulièrement répartis le long de celui-ci. Chaque transducteur comprend des capsules qui sont déformables en fonction de la pression et qui commandent le déplacement du curseur d'un potentiomètre variable incorporé dans un circuit électrique, pour modifier l'intensité d'un courant parcourant ce circuit.

Un tel système présente l'inconvénient de nécessiter des conducteurs électriques pour détecter et transmettre les informations relatives à la pressurisation du câble, ces informations risquant alors d'être perturbées électriquement ou magnétiquement.

La présente invention a pour but de remédier à cet inconvénient.

Elle a pour objet un câble optique pressurisé, comportant une pluralité de fibres optiques, ledit câble optique étant équipé d'un système pour la surveillance de l'état de pressurisation du câble caractérisé en ce que ledit système de surveillance comprend :

des moyens-source prévus pour créer un signal lumineux et injecter celui-ci dans l'une des extrémités d'une fibre optique du câble, ce signal se propageant alors dans la fibre,

des capteurs de pressions disposés de place en place le long du câble, chaque capteur étant prévu pour détecter une variation de la pression locale dans le câble et réagir à cette variation de pression à partir d'une valeur nominale correspondant à un état normal du câble,

des moyens de modifications, respectivement associés aux capteurs, chaque moyen de modification étant apte, en réponse à une réaction du capteur qui lui est associé, à modifier, à l'endroit de la détection, l'intensité de la lumière se propageant dans la fibre optique, et,

des moyens d'échométrie prévus pour engendrer, au niveau de ladite extrémité de fibre dans laquelle est injecté le signal créé par les moyens-source, une représentation du signal lumineux rétrodiffusé par cette fibre lorsque le signal injecté par les moyens-source s'y propage, permettant ainsi de détecter et localiser une perte de pression du câble, par détection et repérage des singularités de ladite représentation du signal rétrodiffusé, résultant de l'action des moyens de modification.

On obtient ainsi un ensemble qui est insensible à toute perturbation électrique ou magnétique. En outre, on s'affranchit, grâce à l'invention, de tout conducteur supplémentaire pour surveiller l'état de pressurisation du câble puisque l'on utilise à cet effet l'une des fibres optiques de ce câble.

Selon un mode de réalisation particulier de l'invention, chaque moyen de modification est apte, en réponse à la réaction du capteur qui lui est associé, à provoquer ou faire varier une sollicitation mécanique de la fibre optique.

Selon un autre mode de réalisation particulier, la fibre optique présente une interruption à chaque endroit de détection et chaque moyen de modification comprend un atténuateur variable prévu pour se déplacer entre les deux surfaces de la fibre, résultant de l'interruption correspondante, en réponse à la réaction du capteur qui lui est associé.

Selon un autre mode de réalisation particulier, les moyens-source comprennent des moyens de commutation optique prévus pour injecter dans l'extrémité de la fibre optique un signal lumineux destiné au contrôle de la pressurisation du câble, ou un autre signal lumineux.

Selon un autre mode de réalisation particulier, le signal lumineux injecté contient, sous forme multiplexée, un signal destiné au contrôle de la pressurisation du câble et un autre signal, le signal rétrodiffusé comprenant ainsi une partie correspondant au signal destiné au contrôle, et les moyens d'échométrie sont prévus pour engendrer la représentation correspondant uniquement à cette partie.

Enfin, selon un mode de réalisation préféré de l'invention, le câble comportant des épissures, les capteurs de pression sont disposés au niveau de ces épissures.

L'invention sera mieux comprise à la lecture de la description qui suit, d'exemples de réalisation donnés à titre indicatif et nullement limitatif, en référence aux dessins annexés sur lesquels :

la figure 1 est une vue schématique d'un câble optique pressurisé équipé selon l'invention,

la figure 2 est une vue schématique d'une extrémité d'une fibre optique du câble, dans laquelle on injecte un signal lumineux et de laquelle on extrait et l'on analyse par échométrie, un signal lumineux rétrodiffusé par cette fibre lorsque le signal injecté s'y propage,

la figure 3 est une vue schématique d'un mode de réalisation particulier des moyens de modification dont le câble optique est équipé,

la figure 4 est un graphique comportant des courbes obtenues par échométrie, qui correspondent respectivement à une pressurisation correcte du câble optique et à une dépressurisation de celui-ci,

la figure 5 est une vue schématique d'un autre mode de réalisation particulier des moyens de modification dont le câble est équipé, et,

les figures 6 à 8 sont des vues schématiques de modes de réalisation particuliers de l'invention, dans lesquels la fibre optique n'est affectée qu'à temps partiel, à la surveillance de l'état de pressurisation du câble optique.

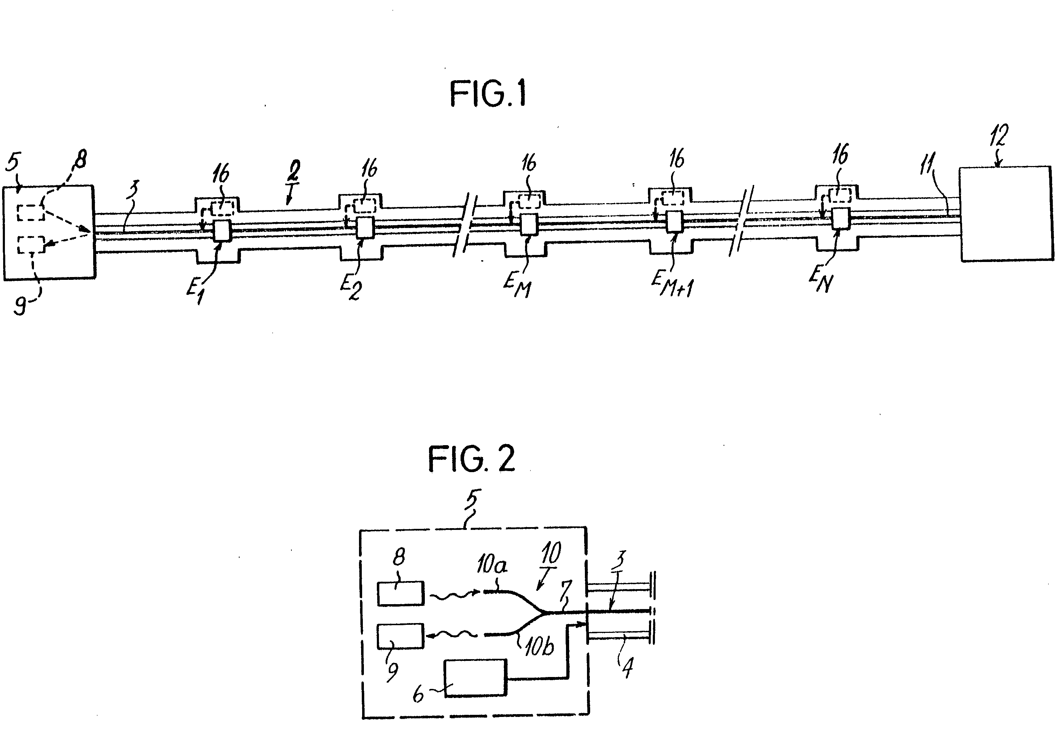

Sur la figure 1, on a représenté schématiquement un câble optique pressurisé 2 selon l'invention. Ce câble comprend, de façon connue, une pluralité de fibres optiques dont une seule, référencée 3, est représentée et utilisée dans l'invention. Le câble optique est muni, à l'une 4 des ses extrémités, d'un ensemble 5 comprenant (figure 2) :

des moyens 6 de pressurisation du câble optique,

des moyens-source 8 pour créer un signal lumineux destiné au contrôle de la pressurisation du câble et injecter ce signal dans l'extrémité 7 correspondante de la fibre optique 3, et,

des moyens d'échométrie 9 prévus pour engendrer, au niveau de l'extrémité considérée 7 de la fibre 3, une représentation du signal lumineux rétrodiffusé par cette fibre lorsque le signal injecté dans celle-ci s'y propage.

A titre d'exemple, l'extrémité 7 de la fibre 3 est munie d'un coupleur en Y 10, les moyens-sources 8 sont constitués par une diode laser, le signal lumineux émis par celle-ci étant injecté dans l'une des branches du coupleur 10, et les moyens d'échométrie 9 sont constitués par un réflectomètre disposé de façon à recevoir la partie du signal rétrodiffusé, issue de l'autre branche 10b du coupleur 10.

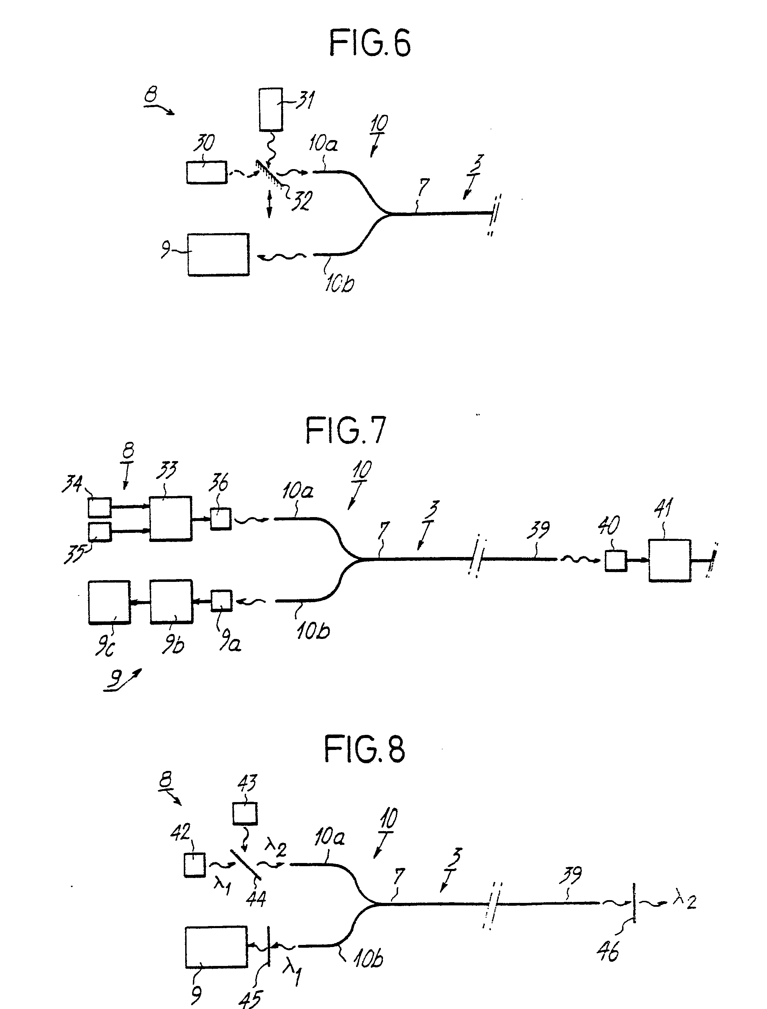

Bien entendu, les autres fibres du câble 2 sont destinées à transmettre des informations entre les extrémités du câble. Comme on le verra dans la description des figures 6 à 8, la fibre 3 peut n'être que temporairement affectée au contrôle de la pressurisation du câble et être affectée le reste du temps, à la transmission d'informations.

On ne peut éventuellement munir l'autre extrémité 11 du câble, d'un autre ensemble 12 comparable à l'ensemble 5, en ne mettant en service les moyens-source et les moyens d'échométrie de cet autre ensemble que lorsque les moyens-source 8 et les moyens d'échométrie 9 de l'ensemble 5 ne fonctionnent pas.

Par la suite, on suppose également que seuls les moyens de pressurisation contenus dans l'ensemble 5 fonctionnent, le repérage d'un éventuel point de dépressurisation étant moins précis lorsque le câble est pressurisé par ses deux extrémités.

De façon classique, le câble 2 comporte un certain nombre d'épissures $E_1$, $E_2$, ..., $E_M$, $E_{M+1}$, ..., $E_N$, réparties de place en place sur toute la longueur du câble. Celui-ci mesure par exemple une quarantaine de kilomètres de long et les épissures sont placées tout les deux kilomètres, le nombre N étant ainsi de l'ordre de 20.

Au niveau de chaque épissure, est disposé un capteur de la pression qui règne dans le pot contenant cette épissure.

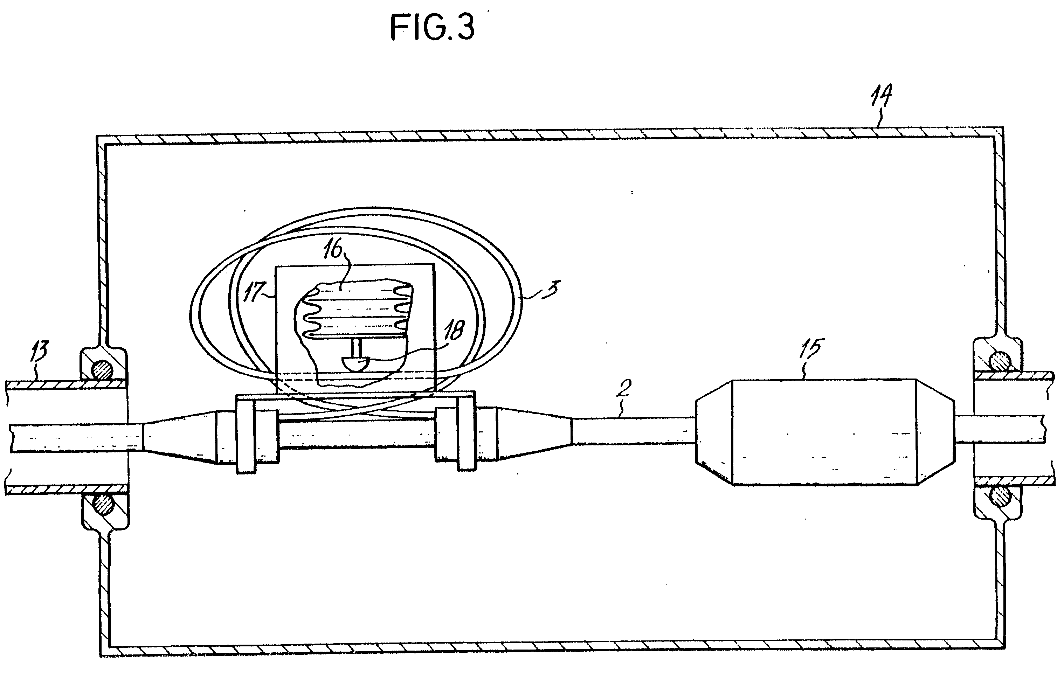

Un premier mode de réalisation de l'invention est schématiquement représenté sur la figure 3. Le câble 2 est contenu dans une conduite sous pression 13 pourvue de pots d'épissurage en nombre égal à celui des épissures. Sur la figure 3, on a représenté un tel pot d'épissurage référencé 14 et contenant une épissure de masse 15. Bien entendu, la conduite sous pression peut renfermer plusieurs câbles optiques, chacun de ces câbles étant alors pourvu d'épissures respectivement contenues dans les pots d'épissurage 14.

Dans chaque pot d'épissurage 14, la fibre optique 3 destinée au contrôle de la pressurisation du câble 2 est extraite du jonc que ce dernier comporte, et forme par exemple deux boucles dans le pot considéré. Le capteur de pression 16 correspondant au pot d'épissurage 14 est monté dans ce dernier, sur un support 17 lui-même fixé au câble 2, et éventuellement, au pot d'épissurage 14. Le capteur de pression 16 est du type mécanique à poussoir. Il consiste par exemple en un manostat du genre de ceux qui sont commercialisée par la Société RICHARD-PEKLY et utilisés dans les câbles téléphoniques pressurisés pour provoquer une variation de résistance électrique d'une paire métallique, permettant ainsi une détection de pertes de pression du câble, par surveillance de cette variation de résistance.

La fibre optique 3 est insérée dans le support 17 de façon que le poussoir 18 dont est pourvu le capteur 16 puisse provoquer ou faire varier une sollicitation mécanique de l'une des boucles que forme la fibre lorsque la pression diminue dans le pot d'épissurage 14.

Le contrôle de la pressurisation du câble optique 2 est effectué de la façon suivante :

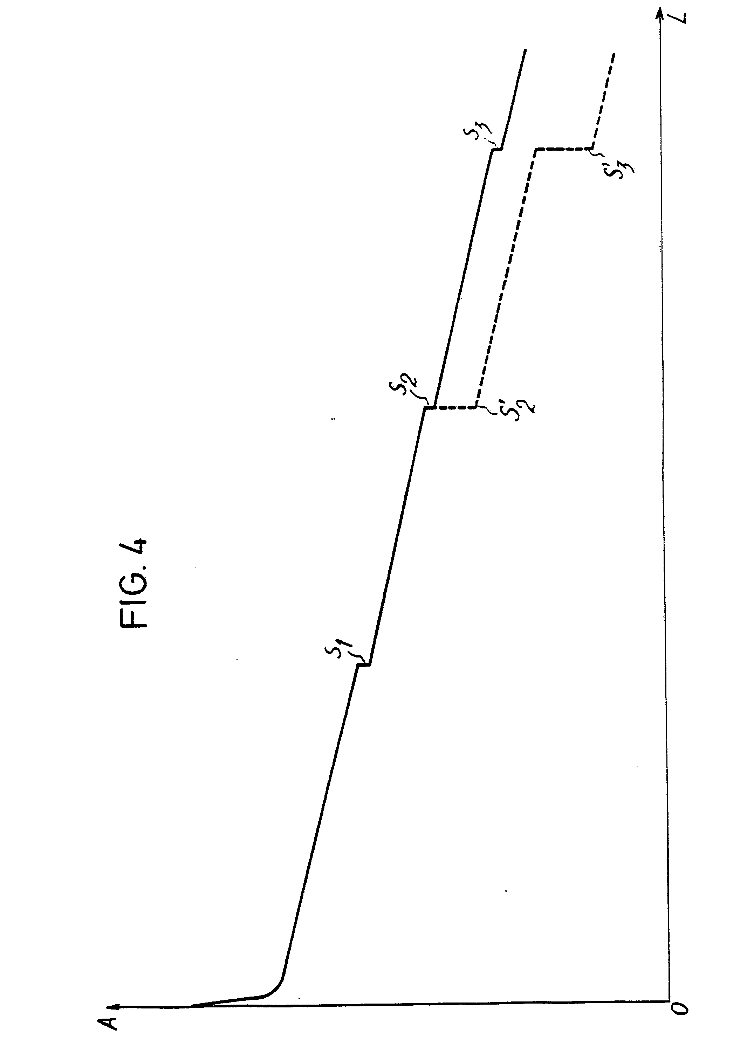

La diode laser 8 et le réflectomètre 9 sont mis en service. Un signal lumineux de contrôle est alors injecté dans la fibre optique 3 qui rétrodiffuse un signal lumineux dont une partie est captée par le réflectomètre 9. Lorsque le câble est correctement pressurisé, le réflectomètre fournit une courbe du genre de celle qui est représentée en trait plein sur le diagramme de la figure 4, cette courbe traduisant les variations de l'intensité A du signal rétrodiffusé (portée en ordonnées) en fonction de la position L sur la fibre 3, cette position étant portée en abscisses, l'origine des abscisses étant prise en l'extrémité 7 de la fibre, la plus proche des moyens de pressurisation 6 (figure 2).

L'intensité A est une fonction décroissante de la position L et l'on observe sur la courbe des singularités $S_1$, $S_2$, ..., $S_N$, correspondant respec-

tivement aux épissures $E_1$, $E_2$, ...., $E_N$, seules les trois premières singularités $S_1$, $S_2$ et $S_3$ étant représentées sur la figure 4.

En cas de dépressurisation due à une fuite, les poussoirs des capteurs situés en aval du point où a lieu la fuite (le sens amont étant celui qui est tourné vers les moyens de pressurisation) appuient sur la fibre optique 3, modifiant ainsi les propriétés de transmission de celle-ci. L'action des poussoirs se traduit alors sur la courbe de la figure 4 par l'apparition de singularités supplémentaires en les points de la fibre où sont placés les capteurs, et en l'occurrence, par l'accroissement des singularités correspondant aux épissures qui se trouvent en aval du point où a lieu la fuite, les accroissements étant d'autant plus importants que l'on s'éloigne vers l'aval de ce point puisque la pression diminue alors d'autant plus.

Dans l'exemple représenté sur la figure 4, les singularités $S_2$, $S_3$, ..., $S_N$ sont remplacées par des singularités plus importantes $S'_2$, $S'_3$, ..., $S'_N$ et la courbe se trouve déplacée vers le bas à partir de la singularité $S'_2$, ce déplacement étant représenté en pointillés sur la figure 4. Au vu de la modification de la courbe, une personne chargée de surveiller le câble optique sait alors non seulement qu'une fuite s'est produite en un point du câble mais encore dans quelle position de celui-ci s'est produite la fuite, en l'occurrence dans la portion délimitée par les épissures $E_1$ et $E_2$.

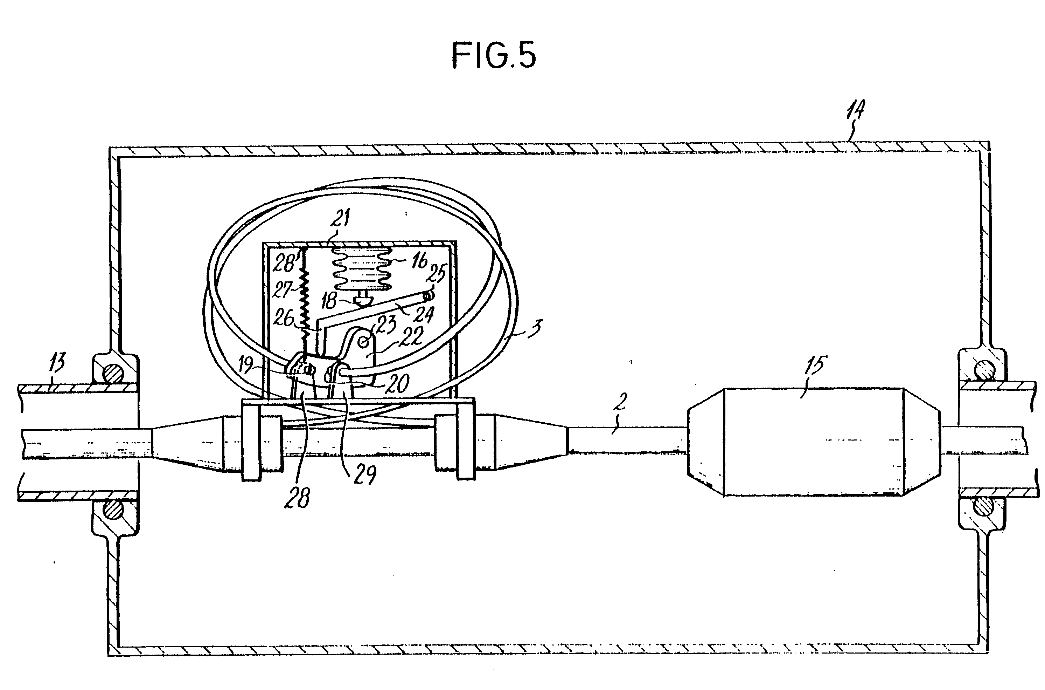

Sur la figure 5, on a représenté schématiquement un autre mode de réalisation particulier de l'invention, dans lequel l'une des boucles de la fibre optique 3 présente une interruption faisant ainsi apparaître deux surfaces de rupture 19 et 20. Le capteur de pression 16 est monté sur un support 21 qui est lui-même fixé au câble optique 2, et éventuellement, au pot d'épissurage 14. Un atténuateur variable 22, commercialement disponible et présentant une opacité variable d'une extrémité à l'autre, est monté tournant sur le support 21, par l'intermédiaire d'un acte 23. Le capteur 16 est prévu pour commander la rotation de cet atténuateur lorsque la pression varie dans le pot d'épissurage 14. Pour ce faire, un levier 24 est interposé entre le poussoir 18 et l'atténuateur 22 de façon que le poussoir 18 puisse appuyer sur le levier 24 lorsque la pression diminue dans le pot d'épissurage. Le levier est monté tournant sur le support 21 par l'intermédiaire d'un axe 25 situé à l'une des extrémités de ce levier. Son autre extrémité est munie d'un poussoir 26 prévu pour appuyer sur la périphérie de l'atténuateur 22 lorsque la pression diminue dans le pot d'épissurage. Des moyens élastiques, par exemple constitués par un ressort 27 dont une extrémité 28 est fixée au support 21 et dont l'autre extrémité est fixée à la périphérie de l'atténuateur 22, sont prévus pour rappeler cet atténuateur vers sa position initiale lorsque le poussoir 26 du levier 24 n'appuie plus sur lui.

La fibre optique 3 est insérée dans le support 21 de façon que ses deux surfaces de rupture 19 et 20 soient en regard l'une de l'autre et de part et d'autre de l'atténuateur 22. Les parties de la fibre optique 3 respectivement voisines des surfaces 19 et 20 sont par exemple maintenues dans des supports 28 et 29, eux-même fixés sur le support 21, de manière à obtenir la position souhaitée pour les surfaces 19 et 20. Celles-ci sont réalisées par clivage de la fibre optique 3 de façon qu'un signal lumineux émis par la diode laser 5 et se propageant dans la fibre optique 3 pour émerger de la surface de rupture 19 de celle-ci puisse pénétrer à nouveau dans la fibre 3 par la surface de rupture 20, après avoir traversé l'atténuateur 22. Celui-ci est monté sur son axe de rotation 23 de façon qu'une dépressurisation du pot d'épissurage 14 entraîne une rotation de l'atténuateur 22 dans le sens des opacités croissantes, provoquant ainsi une diminution de l'intensité du signal rétrodiffusé, correspondant au signal émis par la diode laser, une fois que ce signal rétrodiffusé a traversé l'atténuateur.

Une dépressurisation du câble optique se traduit alors sur la courbe représentée sur la figure 4 d'une façon identique à celle qui a été expliquée plus haut, ce qui permet encore de détecter et localiser cette dépressurisation.

Bien entendu, les capteurs de pression pourraient être disposés au niveau de points du câble autres que les épissures de celui-ci, mais cela compliquerait l'équipement du câble et, notamment dans la réalisation représentée sur la figure 5, qui implique des interruptions de la fibre optique 3, l'atténuation des signaux lumineux se propageant dans celle-ci s'en trouverait augmentée.

La fibre optique 3 peut être consacrée à la surveillance de la pressurisation du câble à temps plein ou à temps partiel. Dans ce dernier cas, on n'effectue la surveillance qu'à certains moments, le reste du temps étant affecté à la transmission d'informations par la fibre 3. Sur les figures 6 à 8, on a représenté schématiquement d'autres modes de réalisation particuliers de l'invention permettant ce double usage de la fibre 3.

Dans le mode de réalisation schématiquement représenté sur la figure 6, les moyens-source 8 comprennent : une source de lumière 30, prévue pour émettre un signal lumineux destiné au contrôle de la pressurisation du câble optique ; une autre source de lumière 31, prévue pour émettre un signal lumineux porteur d'informations que l'on souhaite également transmettre par la fibre 3 ; et des moyens de commutation optique 32, aptes à se trouver dans deux états, l'un des deux états autorisant l'injection du signal lumineux de contrôle émis par la source 30 dans la fibre optique 3, par l'intermédiaire de la branche 10a du coupleur 10 prévue à cet effet, et l'autre état autorisant l'injection du signal porteur d'informations émis par la source 31, dans la branche en question.

Les moyens de commutation optique 32 consistent par exemple en un miroir plan disposé à 45° de cette branche 10a et déplaçable entre une position escamotée et une position de commutation à l'aide de moyens non représentés. La source 30 est alors par exemple disposée en regard de la branche considérée du coupleur de façon à pouvoir injecter le signal de contrôle dans cette branche lorsque le miroir plan est escamoté. L'autre source 31 est alors disposée de façon qu'elle émette un faisceau lumineux perpendiculairement à cette branche et que ce faisceau soit renvoyé en direction de celle-ci par le miroir 32 lorsqu'il est en position de commutation, position dans laquelle il se trouve interposé entre la source 30 et la branche 10a du coupleur 10.

Dans le mode de réalisation particulier représenté sur la figure 7, le double emploi de la fibre optique 3 est obtenu au moyen d'un multiplexage temporel. Les moyens-source 8 comprennent des moyens de multiplexage 33 à deux entrées, l'une des entrées recevant un signal électrique de contrôle, engendré, de façon récurrente et à des intervalles de temps donnés, par un émetteur 34, l'autre entrée recevant un signal électrique porteur d'informations, engendré par un autre émetteur 35. La sortie des moyens de multiplexage 33 est reliée à un convertisseur électro-optique 36 situé en regard de la branche 10a du coupleur 10, destinée à l'injection de signaux lumineux dans la fibre optique 3, de manière à pouvoir injecter dans celle-ci un signal lumineux correspondant aux signaux électriques respectivement émis par les sources 34 et 35 et multiplexés par les moyens de multiplexage 33. Ces derniers sont par exemple des moyens de multiplexage par paquets, prévus pour munir les paquets correspondant au signal de contrôle, de mots de synchronisation permettant leur reconnaissance.

Les moyens d'échométrie 9 comprennent un photo-récepteur 9a qui est disposé en regard de la branche 10b du coupleur 10 correspondant à ces moyens d'échométrie 9, et qui est prévu pour convertir le signal rétrodiffusé par la fibre optique 3 dont une partie émerge de la branche considérée, en un signal électrique, des moyens 9b de démultiplexage, dont l'entrée est reliée à la sortie du photo-récepteur 9a et qui sont prévus pour reconstituer un signal électrique homologue de la partie du signal rétrodiffusé correspondant au signal de contrôle, cette partie étant reconnue grâce aux mots de synchronisation, et enfin un système d'échométrie 9c dont l'entrée est reliée à la sortie des moyens 9b de démultiplexage, de manière à pouvoir obtenir une courbe du genre de celle qui est représentée sur la figure 4.

Bien entendu, la détection des informations transmises par la fibre optique 3 est réalisée à l'autre extrémité 39 de celle-ci au moyen d'un photo-détecteur 40 associé à des moyens de démultiplexage appropriés 41.

Sur la figure 8, on a représenté schématiquement un autre mode de réalisation particulier de l'invention, permettant le double emploi de la fibre optique 3 au moyen d'un multiplexage de longueurs d'onde. Les moyens-source 8 comprennent une source de lumière 42, prévue pour émettre un signal lumineux de contrôle à une longueur d'onde $\lambda_1$ et située en regard de la branche 10a du coupleur 10 correspondant aux moyens-source 5, une autre source de lumière 43, pour émettre un signal lumineux porteur d'informations à une longueur d'onde $\lambda_2$, perpendiculairement à la branche considérée, et une lame 44 transparente à la longueur d'onde $\lambda_1$ et réfléchissante pour la longueur d'onde $\lambda_2$, cette lame étant interposée entre la source 42 et la branche en question et disposée de façon à pouvoir réfléchir le signal émis par l'autre source 43 en direction de la branche considérée. Les moyens d'échométrie 9 sont par exemple constitués par un réflectomètre muni d'un filtre optique 45 prévu pour ne laisser passer que le signal rétrodiffusé de longueur d'onde $\lambda_1$ émergeant de la branche 10b associée au réflectomètre pour que ce dernier permette d'obtenir une courbe du genre de celle qui est représentée sur la figure 4.

Bien entendu, l'autre extrémité 39 de la fibre optique 3 est munie d'un autre filtre optique 46 prévu pour ne laisser passer que le signal de longueur d'onde $\lambda_2$, de manière à ne détecter à cette autre extrémité que le signal porteur d'informations.

Les filtres 45 et 46 sont par exemple réalisables par dépôt de couches multidiélectriques appropriées, respectivement à l'extrémité de la branche 10b du coupleur optique, associée au réflectomètre 9, et à l'autre extrémité 39 de la fibre optique 3.

Au lieu du coupleur en Y dont il a été question précédemment, on pourrait bien entendu utiliser tout autre moyen permettant l'injection d'un faisceau lumineux dans la fibre 3 et l'extraction d'un autre faisceau lumineux de cette fibre, par exemple un miroir semi-transparent disposé en regard de l'extrémité 7 de la fibre ou directement réalisé sur cette extrémité convenablement biseautée, au moyen de couches multi-diélectriques appropriées.

**Revendications**

1. Câble optique pressurisé, comportant une pluralité de fibres optiques, ledit câble optique étant équipé d'un système pour la surveillance de l'état de pressurisation du câble, caractérisé en ce que ledit système de surveillance comprend :

des moyens-source (8) prévus pour créer un signal lumineux et injecter celui-ci dans l'une (7) des extrémités d'une fibre optique (3) du câble (2), ce signal se propageant alors dans la fibre,

des capteurs de pression (16) disposés de place en place le long du câble, chaque capteur étant prévu pour détecter une variation de la pression locale dans le câble et réagir à cette variation de pression à partir d'une valeur nominale correspondant à un état normal du câble,

des moyens de modification (18, 22), respectivement associés aux capteurs, chaque moyen de modification étant apte, en réponse à une réaction du capteur (16) qui lui est associé, à modifier, à l'endroit de la détection, l'intensité de la lumière se propageant dans la fibre optique (3), et,

des moyens d'échométrie (9) prévus pour engendrer, au niveau de ladite extrémité (7) de fibre dans laquelle est injecté le signal créé par les moyens-source (8), une représentation du signal lumineux rétrodiffusé par cette fibre lorsque le signal injecté par les moyens-source s'y propage, permettant ainsi de détecter et localiser une perte de pression du câble, par détection et repérage des singularités de ladite représentation du signal rétrodiffusé, résultant de l'action des moyens de modification (18, 22).

2. Câble optique pressurisé selon la revendication 1, caractérisé en ce que chaque moyen de modification est apte, en réponse à la réaction du capteur (16) qui lui est associé, à provoquer ou faire varier une sollicitation mécanique de la fibre optique (3).

3. Câble optique pressurisé selon la revendication 1, caractérisé en ce que la fibre optique présente une interruption à chaque endroit de détection et en ce que chaque moyen de modification comprend un atténuateur variable (22) prévu pour se déplacer entre les deux surfaces (19, 20) de la fibre, résultant de l'interruption correspondante, en réponse à la réaction du capteur (16) qui lui est associé.

4. Câble optique pressurisé selon l'une quelconque des revendications 1 à 3, caractérisé en ce que les moyens-source (8) comprennent des moyens (32) de commutation optique prévus pour injecter dans l'extrémité (7) de la fibre optique (3) un signal lumineux destiné au contrôle de la pressurisation du câble, ou un autre signal lumineux.

5. Câble optique pressurisé selon l'une quelconque des revendications 1 à 3, caractérisé en ce que le signal lumineux injecté contient, sous forme multiplexée, un signal destiné au contrôle de la pressurisation du câble et un autre signal, le signal rétrodiffusé comprenant ainsi une partie correspondant au signal destiné au contrôle, et en ce que les moyens d'échométrie (9) sont prévus pour engendrer la représentation correspondant uniquement à cette partie.

6. Câble optique pressurisé selon l'une quelconque des revendications 1 à 5, caractérisé en ce que, ce câble comportant des épissures (E₁, ...., E_N), les capteurs de pression (16) sont disposés au niveau de ces épissures.

## Claims

1. Pressurized optical cable, including a plurality of optical fibres, said optical cable being equipped with a system for monitoring the pressurization state of the cable characterized in that said monitoring system comprises :

source means (8) designed to create a light signal and inject it into one (7) of the extremities of an optical fibre (3) of the cable (2), this signal then propagating in the fibre,

pressure detectors (16) disposed at intervals along the cable, each detector being designed to detect a variation in the local pressure in the cable and to react to this pressure variation from a nominal value corresponding to a normal condition of the cable,

modification means (18, 22) respectively associated with the detectors, each modification means being adapted, in response to a reaction of the detector (16) which is associated with it, to modify, at the point of detection, the intensity of the light propagating in the optical fibre (3), and,

echometry means (9) designed to generate, at said end (7) of the fibre into which is injected the signal produced by the source means (8) a representation of a light signal retrodiffused by this fibre when the signal injected by the source means propagates therein, thus making it possible to detect and locate a loss of pressure in the cable, by detecting and referencing singularities of the said representation of the retrodiffused signal resulting from the action of the modification means (18, 22).

2. Pressurized optical cable according to claim 1, characterized in that each modification means is adapted, in response to the reaction of the detector (16) which is associated with it, to cause or to vary a mechanical stressing of the optical fibre (3).

3. Pressurized optical cable according to claim 1, characterized in that the optical fibre has an interruption at each locus of detection, and in that each modification means includes a variable attenuator (22) designed to shift between the two surfaces (19, 20) of the fibre resulting from the corresponding interruption, in response to the reaction of the detector (16) associated with it.

4. Pressurized optical cable according to any one of the claims 1 to 3, characterized in that the source means (8) includes optical switching means (32) designed to inject into the extremity (7) of the optical fibre (3) a light signal designed for the testing of the pressurization of the cable, or another light signal.

5. Pressurized optical cable according to any one of the claims 1 to 3, characterized in that the light signal injected contains, in multiplexed form, a signal designed for testing the pressurization of the cable and another signal, the retrodiffused signal thus including a portion corresponding to the test signal, and in that the echometry means (9) are designed to generate the representation corresponding only to this portion.

6. Pressurized optical cable according to any one of the claims 1 to 5, characterized in that, if this cable includes splices (E₁, ..., E_N), the pressure detectors (16) are disposed at this splices.

## Patentansprüche

1. Unter Druck stehendes optisches Kabel mit einer Vielzahl von optischen Fasern, das mit einem System für die Überwachung des Druckzustandes des Kabels versehen ist, dadurch gekennzeichnet, daß das Überwachungssystem enthält :

Quelleneinrichtungen (8), die dazu vorgesehen sind, ein Lichtsignal zu erzeugen und dieses in eines (7) der Enden einer optischen Faser (3) des Kabels (2) einzuführen, welches Signal sich dann in der Faser ausbreitet,

Druckaufnehmer (16), die verteilt längs des Kabels angeordnet sind, wobei jeder Aufnehmer dazu vorgesehen ist, eine örtliche Druckänderung im Kabel zu ermitteln und auf diese Druckänderung, ausgehend von einem einem Normalzustand des Kabels entsprechenden Nominalwert, zu reagieren,

Änderungseinrichtungen (18, 22), die den Druckaufnehmern jeweils zugeordnet sind, wobei jede Änderungseinrichtung dazu eingerichtet ist, in Abhängigkeit von einer Reaktion des Aufnehmers (16), dem sie zugeordnet ist, in der Umgebung der Aufnahmestelle die Intensität des sich in der optischen Faser (3) ausbreitenden Lichts zu modifizieren, und,

Echometrieeinrichtungen (9), die dazu vorgesehen sind, in Höhe des genannten Endes (7) der Faser, in das das von den Quelleneinrichtungen (8) erzeugte Signal eingeleitet wird, eine Darstellung des durch diese Faser zurückgeworfenen Lichtsignals zu erzeugen, wenn das von den Quelleneinrichtungen eingeleitete Signal sich darin fortpflanzt, so daß auf diese Weise die Ermittlung und Lokalisierung eines Druckverlusts im Kabel durch die Ermittlung und Ortsbestimmung der Unregelmäßigkeiten der genannten Darstellung des zurückgeworfenen Signals, die aus der Reaktion der Änderungseinrichtungen (18, 22) resultieren, ermöglicht wird.

2. Unter Druck stehendes optisches Kabel nach Anspruch 1, dadurch gekennzeichnet, daß jede Änderungseinrichtung dazu eingerichtet ist, in Abhängigkeit von der Reaktion des Aufnehmers (16), dem sie zugeordnet ist, eine mechanische Beanspruchung der optischen Faser (3) hervorzurufen oder variieren zu lassen.

3. Unter Druck stehendes optisches Kabel nach Anspruch 1, dadurch gekennzeichnet, daß die optische Faser eine Unterbrechung in jeder Ermittlungsumgebung hat, und daß jede Änderungseinrichtung ein variables Dämpfungsglied (22) aufweist, das dazu vorgesehen ist, zwischen die zwei Oberflächen (19, 20) der Faser einzutreten, was zu einer entsprechenden Unterbrechung in Abhängigkeit von der Reaktion des Aufnehmers (16), dem es zugeordnet ist, führt.

4. Unter Druck stehendes optisches Kabel nach einem der Ansprüche 1 bis 3, dadurch gekennzeichnet, daß die Quelleneinrichtungen (8) optische Umschalteinrichtungen (32) aufweisen, die dazu vorgesehen sind, in das Ende (7) der optischen Faser (3) ein Lichtsignal einzuleiten, das für die Steuerung der Unterdrucksetzung des Kabels bestimmt ist, oder ein anderes Lichtsignal einzuleiten.

5. Unter Druck stehendes optisches Kabel nach einem der Ansprüche 1 bis 3, dadurch gekennzeichnet, daß das eingeleitete Lichtsignal in multiplexierter Art ein Signal, das zur Steuerung der Unterdrucksetzung der Kabels bestimmt ist, und ein anderes Signal enthält, so daß das zurückgeworfene Signal einen Anteil enthält, der dem für die Steuerung bestimmten Signal entspricht, und daß die Echometrieeinrichtungen (9) dazu vorgesehen sind, eine entsprechende Darstellung nur dieses Anteils zu erzeugen.

6. Unter Druck stehendes optisches Kabel nach einem der Ansprüche 1 bis 5, dadurch gekennzeichnet, daß das Kabel Spleißstellen ($E_1$, ..., $E_N$) aufweist, in deren Höhe die Druckaufnehmer (16) angeordnet sind.

# FIG.1

# FIG. 2

0 161 126

FIG.3

FIG. 4

# FIG.5

0 161 126

# FIG.6

# FIG.7

# FIG.8